# EUROPÄISCHE PATENTSCHRIFT

(11) **EP 1 613 889 B1**
(45) Veröffentlichungstag und Bekanntmachung des Hinweises auf die Patenterteilung: **18.10.2006**
(21) Anmeldenummer: 04721129.7
(22) Anmeldetag: 17.03.2004
(51) Int. Cl.: F16L 45/00

(54) **REVISIONSVERSCHLUSS FÜR EINE REVISIONSÖFFNUNG EINES BLECHKANALS**
MAINTENANCE COVER FOR A MAINTENANCE OPENING IN A SHEET METAL DUCT
FERMETURE POUR L'OUVERTURE D'INSPECTION D'UN CANAL EN TOLE

(30) Priorität: 17.04.2003 DE 10317718
(43) Veröffentlichungstag der Anmeldung: 11.01.2006
(73) Patentinhaber: Metu Meinig AG, 78604 Rietheim-Weilheim (DE)
(72) Erfinder: MEINIG, Manfred, 78604 Rietheim-Weilheim (DE)
(74) Vertreter: Westphal, Klaus
(86) Internationale Anmeldenummer: PCT/EP2004/002724
(87) Internationale Veröffentlichungsnummer: WO 2004/092637

(56) Entgegenhaltungen:
- EP-A- 0 379 189
- AT-B- 293 805
- DE-C- 909 785
- DE-U- 8 225 276
- DE-U- 9 110 681
- DE-U- 29 702 932

## Beschreibung

Die Erfindung betrifft einen Revisionsverschluss nach dem Oberbegriff des Patentanspruchs 1.

Ein Revisionsverschluss im Wesentlichen dieser Art ist aus dem DE Gebrauchsmuster 82 25 276 bekannt. Allerdings ist dieser bekannte Revisionsverschluss nur für Blechkanäle mit eckigem oder sehr flachovalem Querschnitt geeignet. Der durch zwei Schrauben mit dem Außendeckel verbundene Innendeckel kann durch Drehung um 40° bis 60° bezüglich der Revisionsöffnung problemlos ins Kanalinnere eingeführt werden. Der Innendeckel trägt einen Randwulst passend zum Rand der Revisionsöffnung. Nach dem Zurückdrehen in die richtige Ausrichtung richtet sich der Innendeckel durch Herausziehen Richtung Kanalaußenseite in der Öffnung aus. Es sind zwei am Außendeckel anliegende Sterngriffe vorhanden, die mit beiden Händen ergriffen werden. Die eine Hand bleibt nun unter weiterem Herausziehen an einem Sterngriff, um den Innendeckel in der Öffnung zu halten. Die andere Hand muss währenddessen den anderen Sterngriff festziehen. Danach wird erst der zweite Sterngriff festgezogen. Zwischen Innendeckel und Außendeckel wird dabei der Rand der Öffnung lückenlos eingespannt und eine umlaufende Dichtung zusammengepresst. Diese Ausführungsform eines Revisionsverschlusses wurde in den letzten Jahrzehnten in großen Mengen hergestellt und ist in allen Ländern verbreitet, obwohl sie einige gravierende Nachteile aufweist. Das Ausrichten des Revisionsdeckels in der Revisionsöffnung durch Herausziehen ist unpraktisch, insbesondere dauert das Festhalten im herausgezogenen Zustand, bis die Sterngriffe festgezogen sind, zu lange.

Da beim schrägen verdrehten Einführen des Innendeckels in die Revisionsöffnung beide Deckel einen größeren Abstand haben müssen, bedarf es relativ langer Schrauben am Innendeckel, auf welche die Sterngriffe bzw. Schraubhandgriffe zum Festziehen der beiden Deckel aufgeschraubt werden. Daher ragen die Sterngriffe über die Oberfläche des Außendeckels hinaus und bilden ein Hindernis beim Passieren der Einbaustelle bzw. bei anderen Montagearbeiten. Außerdem sind sie optisch unschön. Die tiefgewellte Innenfläche des Innendeckels fördert Schmutzablagerungen und verursacht Luftverwirbelungen, die mit Geräuschbildung und erhöhtem Strömungswiderstand verbunden sind.

Durch die Erfindung soll ein Revisionsverschluss dieser Art derart verbessert werden, dass seine Montage wesentlich vereinfacht und beschleunigt und unabhängig vom Querschnitt des Blechkanals sowohl bei eckigem als auch rundem oder beliebig ovalem Querschnitt mit hervorragender Abdichtung angebracht werden kann.

Diese Aufgabe wird erfindungsgemäß durch die Merkmale des Anspruchs 1 gelöst. Es werden nicht nur alle geschilderten Probleme bekannter Revisionsverschlüsse beseitigt, sondern zusätzlich technische Vorteile erzielt, ohne dass die Herstellung aufwendiger und damit teurer wird.

Ein besonders wichtiger Teil der Erfindung ist die neue, aufeinander abgestimmte Profilierung von Außen- und Innendeckel mit ins Kanalinnere gewölbtem oder eingesenktem Mittelteil. In Verbindung damit ist ein zum Kanalinneren vorspringender Ausrichtwulst am Außendeckel vorgesehen. Ein Ausrichtwulst war auch im Stand der Technik bekannt, der aber im Gegensatz zu der erfindungsgemäßen Ausführungsform am Innendeckel vorgesehen war. Dadurch treten die Nachteile beim Montieren des Revisionsverschlusses auf, wie sie oben in Verbindung mit dem Stand der Technik geschildert wurden.

Da der umlaufende Ausrichtwulst, der verhältnismäßig schmal, aber hoch ausgebildet sein sollte, am Außendeckel sitzt, wird beim Einbau des Revisionsverschlusses der an der Spannvorrichtung gehaltene Revisionsdeckel gegen die Kanalwand gedrückt, um ihn auszurichten. Hierdurch ist es möglich, für die Spannvorrichtung Spannhebel gemäß Anspruch 10 bis 16 anstelle der auch möglichen Schraubhandgriffe gemäß den Ansprüchen 17 bis 20 einzusetzen.

Bei Verwendung von Spannhebeln wird der Revisionsverschluss durch kräftigen Druck auf die Spannhebel gespannt.

Bei Verwendung von Schraubhandgriffen ist es gegenüber bekannten Lösungen vorteilhafter und angenehmer, die Schraubhandgriffe gegen die Kanalwand drückend zu drehen, so dass die Schraubhandgriffe gleichzeitig betätigt werden können.

Maßnahmen zur Abdichtung des Revisionsverschlusses sind mit den Ansprüchen 2, 3 und 4 angegeben.

Durch die besondere Gestaltung von Außen- und Innendeckel gemäß den Ansprüchen 5 bis 7 wird eine Eigenfederung der Deckel erzielt, so dass auch bei Alterung der Dichtungen eine dauerhafte Dichtung gewährleistet ist.

Mit dem gemäß Anspruch 8 vorgeschlagenen Haltewulst am Innendeckel wird die am Deckelrand umlaufende Dichtung abgestützt und der Rand stabilisiert.

Ist gemäß der Erfindung der gesamte Mittelteil des Außendeckels an den Ausrichtwulst anschließend in Richtung auf das Kanalinnere gewölbt, werden die Spannhebel bzw. Schraubhandgriffe der Klemmeinrichtung in Richtung auf das Kanalinnere versetzt, so dass die Spannhebel bzw. Schraubenenden die Kanalwand kaum oder gar nicht mehr überragen.

Anhand der Figuren werden Ausführungsformen der Erfindung beispielhaft näher erläutert. Es zeigen:
Figuren 1 und 2 senkrechte Mittelschnitte durch eine erste Ausführungsform des erfindungsgemäßen Revisionsverschlusses in nicht festgezogenem oder geöffnetem bzw. festgezogenem oder geschlossenem Zustand des Revisionsverschlusses,
Figuren 3 und 4 senkrechte Mittelschnitte von Außendeckel bzw. Innendeckel, die gegenüber den Darstellungen der Figuren 1 und 2 um 90° um die vertikale Mittelachse von Fig.1 und 2 verdreht sind,
Figur 5 eine teilweise geschnittene Schrägansicht des Revisionsverschlusses gemäß Figuren 1 und 2,
Figur 6 eine Seitenansicht eines bei der Ausführungsform gemäß Figuren 1 und 2 verwendeten Schraubhandgriffs,
Figur 7 eine teilweise geschnittene Schrägansicht des Schraubhandgriffs,
Figur 8 einen Axialschnitt durch den Schraubhandgriff mit eingesetztem, als Verbindungsschraube dienendem Schraubenbolzen,
Figuren 9 und 10 den Figuren 1 und 2 entsprechende Schnitte dieser ersten Ausführungsform, die sich von den Figuren 1 und 2 nur durch die Form der Dichtung an den Rändern des Revisionsverschlusses unterscheidet,
Figuren 11 und 12 den Figuren 1 und 2 entsprechende Schnitte durch eine zweite Ausführungsform des erfindungsgemäßen Revisionsverschlusses in geöffnetem bzw. geschlossenem Zustand desselben, die statt der Schraubverbindung mit umlegbaren Spannhebeln arbeitet,
Figuren 13 und 14 teilweise geschnittene Schrägansichten der zweiten Ausführungsform in geöffnetem bzw. geschlossenem Zustand des Revisionsverschlusses,
Figur 15 eine Seitenansicht der bei der zweiten Ausführungsform verwendeten Klemm- oder Spanneinrichtung mit Spannhebeln,
Figur 16 einen Teilschnitt gemäß der Linie XVI-XVI in Fig.15,
Figur 17 einen Schnitt längs der Linie XVII-XVII in Fig.15,
Figur 18 eine Schrägansicht der in den Figuren 15 bis 17 gezeigten Teile, wobei eine Sperreinrichtung für den Spannhebel sich in Sperrstellung befindet,
Figuren 19 bis 22 den Figuren 15 bis 18 entsprechende Darstellungen der gleichen Teile, wobei sich die Sperreinrichtung in entsperrter Öffnungsstellung befindet,
Figuren 23 bis 25 verschiedene Schrägansichten eines in der zweiten Ausführungsform gemäß Figuren 11 bis 14 verwendeten Spannhebels,
Figuren 26 und 27 verschiedene Schrägansichten des in der Spanneinrichtung gemäß Figuren 15 bis 22 verwendeten Sperrkörpers,
Figuren 28 und 29 verschiedene Schrägansichten des in der Spanneinrichtung der zweiten Ausführungsform gemäß Figuren 11 bis 14 verwendeten Lagerbolzens, und
Figuren 30 und 31 den Figuren 1 und 2 entsprechende Schnitte durch eine dritte Ausführungsform des erfindungsgemäßen Revisionsverschlusses, der an einem Blechrohr mit rundem Querschnitt angebracht ist.

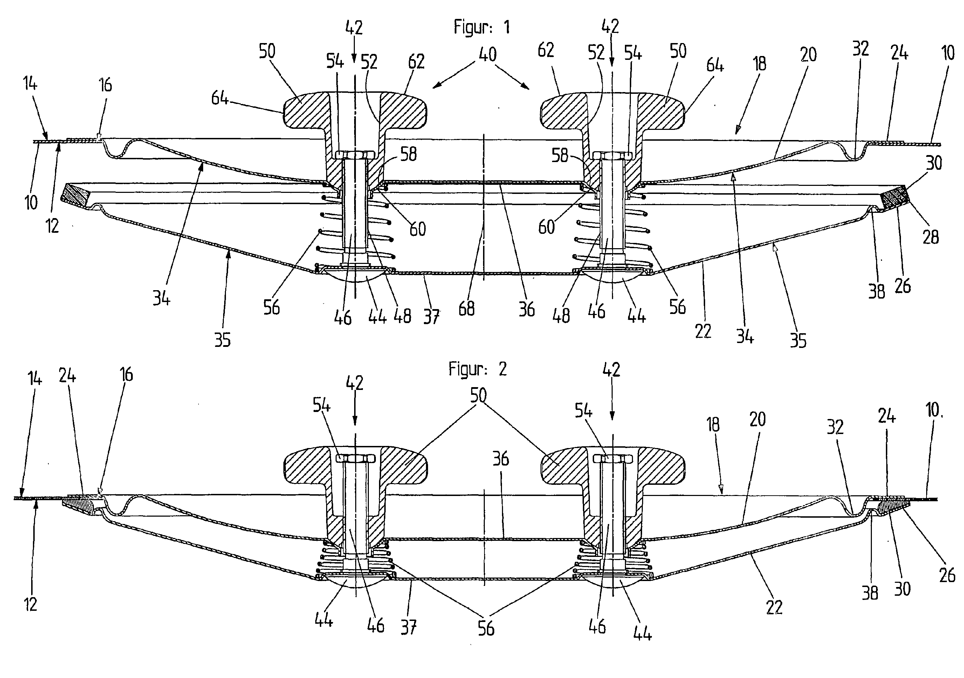

Die in den Figuren 1 bis 8 dargestellte erste Ausführungsform des erfindungsgemäßen Revisionsverschlusses ist für einen Blechkanal mit rechteckigem Querschnitt geeignet, von welchem die Figuren 1 und 2 eine ebene Kanalwand 10 mit Innenwand 12 und Außenwand 14 sowie einer eine ovale Revisionsöffnung umrahmenden Kante 16 zeigen.

Der allgemein mit 18 bezeichnete Revisionsverschluß besteht aus einem ovalen Außendeckel 20 und einem ovalem Innendeckel 22. Der Außendeckel 20 besitzt einen im Wesentlichen ebenen Rand 24, der an der Außenwand 14 des Kanals zur Anlage kommt. Der flache Rand 26 des Innendeckels 22 ist leicht schräg gegen die Kanalinnenwand 12 geneigt, so dass seine Außenkante 28 näher an der Kanalinnenwand 12 liegt als der übrige Rand 26. Der Rand 26 trägt einen Dichtstreifen 30, der im festgezogenen Zustand des Revisionsverschlusses 18 zur Anlage an der Innenwand 12 kommt.

Der Außendeckel 20 ist anschließend an den Rand 24 mit einem schmalen, aber hohen umlaufenden Ausrichtwulst 32 versehen, der zum Kanalinneren vorspringt. Der gesamte vom Ausrichtwulst 32 umfasste Mittelteil 34 des Außendeckels 20 ist gegenüber dem Rand 24 ins Kanalinnere eingewölbt bzw. eingesenkt, wobei der an den Ausrichtwulst 32 anschließende Abschnitt des Mittelteils 34 sphärisch gewölbt und der mittlere Abschnitt 36 des Mittelteils eben ist.

Der Innendeckel 22 trägt anschließend an den Rand 26 einen nach außen vorspringenden Haltewulst 38, dessen Tiefe geringer ist als die Tiefe des Ausrichtwulstes 32 am Außendeckel 20. Der Mittelteil 35 ist etwa parallel zum Mittelteil 34 des Außendeckels ins Kanalinnere eingesenkt, besteht jedoch im Wesentlichen aus zwei schrägen Ebenen und zwei halbkegeligen Abschnitten einschließlich des parallel zum mittleren Abschnitt 36 des Außendeckels 20 verlaufenden ebenen mittleren Abschnitts 37 des Innendeckels 22.

Die allgemein mit 40 bezeichnete Spannvorrichtung zum Festziehen von Außendeckel 20 und Innendeckel 22 in die in Figur 2 dargestellte geschlossene Stellung des Revisionsverschlusses besteht bei dieser Ausführungsform aus zwei gleichen Klemmeinrichtungen 42, die in Längsrichtung des insgesamt ovalen Revisionsverschlusses 18 im Abstand voneinander derart angebracht sind, dass sie etwa auf eine gedachte Längsachse des Revisionsverschlusses 18 zentriert sind. Jede Klemmeinrichtung 42 besteht im Wesentlichen aus einem mittels eines Kopfes 44 im ebenen, mittleren Abschnitt 37 des Innendeckels 22 verankerten, nach außen stehenden Schraubenbolzen 46 mit Außengewinde 48. Auf das äußere Ende des Schraubenbolzens 46 ist ein mit entsprechendem Innengewinde versehener Schraubhandgriff 50 aufgeschraubt. In seinem äußeren Teil enthält jeder Schraubhandgriff eine Ausnehmung 52, die zur Aufnahme des oberen Teils des Schraubenbolzens 46 beim Festziehen der Klemmeinrichtung 42 dient, so dass derselbe nie aus dem oberen Abschluss des Schraubhandgriffs 50 vorsteht. Am oberen bzw. äußeren Ende des Schraubenbolzens 46 ist eine Anschlagmutter 54 aufgeschraubt, die als Anschlag beim Herausschrauben des Schraubhandgriffs 50 dient. Der Schraubenbolzen 46 wird von einer nach außen hin leicht konischen Schraubendruckfeder 56 in radialem Abstand umfasst, deren unteres Ende an der Außenseite des Innendeckels 22 und deren oberes Ende an der Innenseite des Außendeckels 20 abgestützt ist, so dass Außendeckel 20 und Innendeckel 22 stets auseinandergedrückt werden.

An der Unter- oder Innenseite des Schraubhandgriffs 50 ist eine sphärische Druckfläche 58 angeordnet, die auf der Außenseite einer gleich geformten sphärischen Kugelpfanne 60 gleitend anliegt, welche den Schraubenbolzen 46 umfasst und in den mittleren Abschnitt 36 des Außendeckels 20 eingedrückt ist.

Beim Einsetzen des Revisionsverschlusses 18 in die Revisionsöffnung, deren Kante mit 16 bezeichnet ist, wird zunächst der im Abstand vom Außendeckel 20 hängende Innendeckel durch schräges Einführen ins Kanalinnere gebracht, bis der Rand 24 des Außendeckels 20 an der Außenseite des Kanals 10 flach anliegt. Der Ausrichtwulst 32 gewährleistet, dass sich der Außendeckel 20 beim Einsetzen selbsttätig innerhalb der Kante 16 ausrichtet. Sodann können gleichzeitig die Schraubhandgriffe 50 der beiden Klemmeinrichtungen 42 gedreht werden, wodurch der Innendeckel 22 gegen den Außendeckel entgegen der Wirkung der Schraubendruckfedern 56 gezogen wird, bis der Dichtstreifen 30 mit dem darunterliegenden Rand 26 gemäß Fig.2 an der Innenwand 12 des Kanals 10 unter Druckausübung angepresst ist.

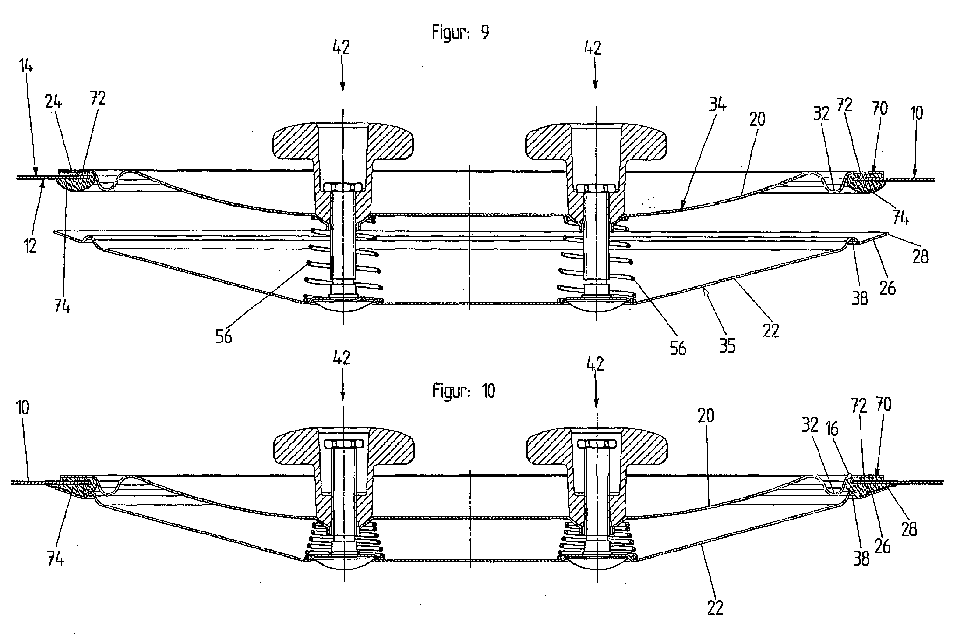

Die Außenkante 28 des Innendeckels 22 liegt dabei etwa an der Kanalinnenwand 12 an, wobei der Dichtstreifen 30 zusammengepreßt wird. Ein Ausweichen des Dichtstreifens 30 wird dabei durch den Haltewulst 38 verhindert. Infolge der hohen Spannkraft der Klemmeinrichtung werden nicht nur der Rand 24 des Außendeckels 20 und die Außenkante 28 des Innendeckels 22 zur Anlage an der Außenwand 14 bzw. der Innenwand 12 des Kanals 10 gebracht, sondern es werden zusätzlich der Mittelteil 34 des Außendeckels 20 und der Mittelteil 35 des Innendeckels 22 derart vorgespannt, dass auch nach Altern oder Setzen des Dichtstreifens 30 bzw. bei dem Ausführungsbeispiel gemäß Figur 9 und 10 der Dichtung 70 der Spanndruck auf die Dichtung nahezu unvermindert aufrecht erhalten bleibt.

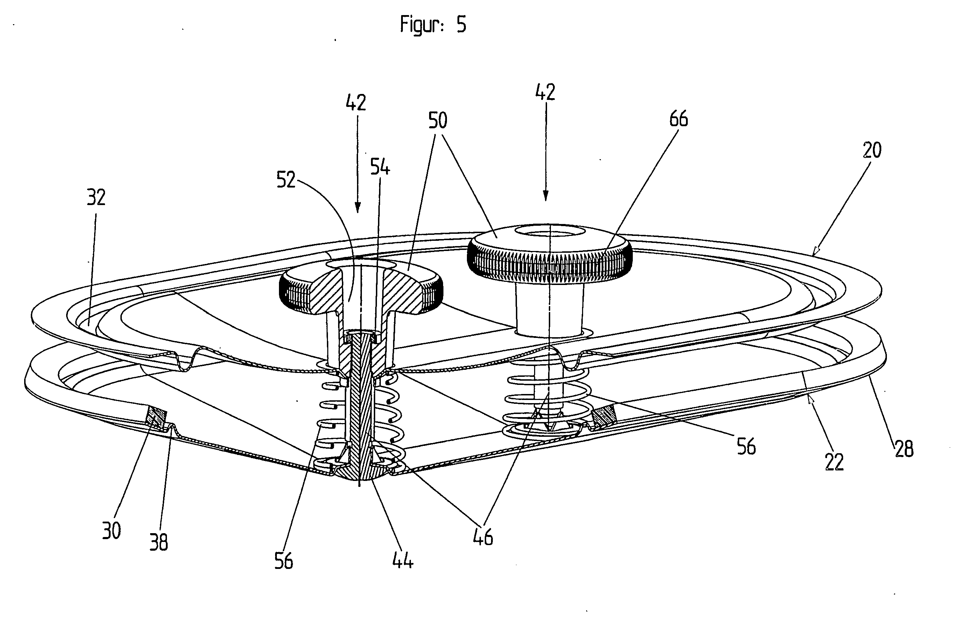

Wie aus den Figuren 1 und 2 ersichtlich ist, ragen die Schraubenhandgriffe kaum störend über die Wand des Kanals 10 nach außen und weisen überdies eine abgerundete Außenfläche 62 auf, die keinen Anlass zu Verletzungen oder Hängenbleiben bietet. Der Umfang 64 des oberen Teils der Schraubhandgriffe 50 ist zum gleichen Zweck kreisförmig ausgebildet und trägt zur leichteren Betätigung eine Rändelung 66 (Figuren 5 bis 7). Das Vorspringen bzw. Einsenken beider Deckel 20 und 22 erleichtert nicht nur das Einsetzen in die Revisionsöffnung, sondern ermöglicht auch, dass die Klemmeinrichtungen 42 kaum über den Umfang des Kanals nach außen stehen. Auch im Kanalinneren ergibt sich eine glatte Innenfläche, die kaum zu Schmutzablagerungen und Luftverwirbelungen Anlass gibt. Im vollständig festgezogenen Zustand gemäß Figur 2 ragt der Schraubenbolzen 46 einschließlich der Anschlagmutter 54 nicht über die Außenfläche 62 des zugehörigen Schraubhandgriffs 50 hinaus. Dadurch besteht vor allem in diesem Zustand keine Gefahr beim Passieren der Einbaustellen bzw. bei anderen Montagearbeiten, und die Außenansicht des Revisionsverschlusses ist formschöner als bei bekannten Revisionsverschlüssen.

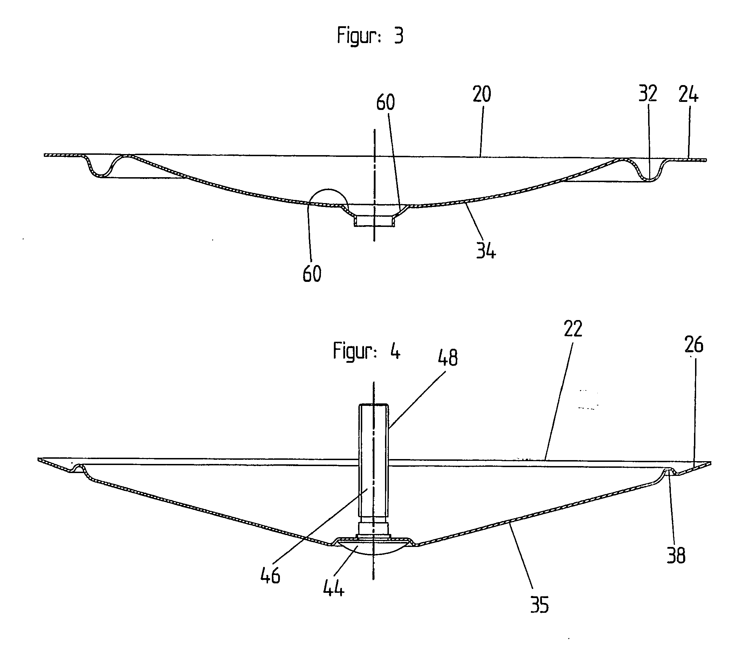

In den Figuren 3 und 4 sind der Außendeckel 20 bzw. der Innendeckel 22 zur besseren Übersichtlichkeit ohne die übrigen Teile des Revisionsverschlusses mit Ausnahme des Schraubenbolzens 46 in Fig.4 dargestellt. In diesen beiden Figuren, die gegenüber den Figuren 1 und 2 um 90° um eine in der Zeichenebene gelegene Vertikalachse 68 verdreht sind, ist entsprechend nur eine Kugelpfanne 60 am Außendeckel 20 (Fig.3) bzw. ein Schraubenbolzen 46 am Innendeckel 22 zu sehen.

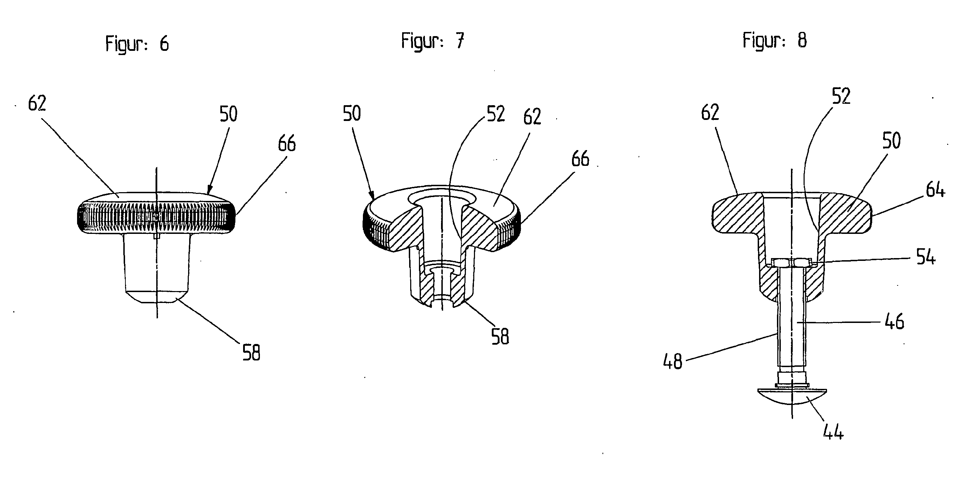

Figur 5 veranschaulicht noch einmal etwas deutlicher in Schrägansicht den geöffneten Zustand des bei der Ausführungsform gemäß den Figuren 1 und 2 verwendeten Revisionsdeckels für ebene Kanalwände. Die Figuren 6 bis 8 zeigen Einzelheiten des dabei verwendeten Schraubhandgriffs 50.

Da viele Teile dieser ersten, in den Figuren 1 bis 8 dargestellten Ausführungsform unverändert oder nahezu unverändert auch bei anderen Ausführungsformen der Erfindung Verwendung finden, werden die bei Schilderung der ersten Ausführungsform verwendeten Bezugszeichen teilweise auch bei den Darstellungen der anderen Ausführungsformen für gleiche oder entsprechende Teile verwendet, um ihre wiederholte Beschreibung zu vermeiden.

Das in den Figuren 9 und 10 dargestellte Beispiel unterscheidet sich von der Ausführungsform der Figuren 1 bis 8 lediglich dadurch, dass der Dichtstreifen 30 auf dem Rand 26 des Innendeckels 22 ersetzt ist durch eine die Kante 16 der Revisionsöffnung umfassende elastische Dichtung 70 mit U-Profil. Während der obere bzw. äußere Schenkel 72 der Dichtung 70 beim Festziehen der beiden Klemmeinrichtungen 42 zwischen dem Rand 24 des Außendeckels 20 und der Außenwand 14 des Kanals 10 eingeklemmt wird, ist der innere Schenkel 74 der Dichtung 70 gegenüber dem äußeren Schenkel 72 wulstförmig verdickt, so dass beim Festziehen der Klemmeinrichtungen 42 die Außenkante 28 des Randes 26 des Innendeckels 22 infolge der Einschränkung durch den Haltewulst 38 in den verdickten inneren Schenkel 74 stark eingepresst bzw. eingesenkt wird. Durch diese Formgebung der U-förmigen Dichtung 70 wird nicht nur eine besonders gute Abdichtung unabhängig von der Alterung des Material der Dichtung 70 erreicht, sondern es werden auch Verletzungen oder Behinderungen durch die meist scharfe Kante 16 der Revisionsöffnung vor allem bei Arbeiten im Kanalinneren oder beim Einsetzen des Revisionsverschlusses verhindert.

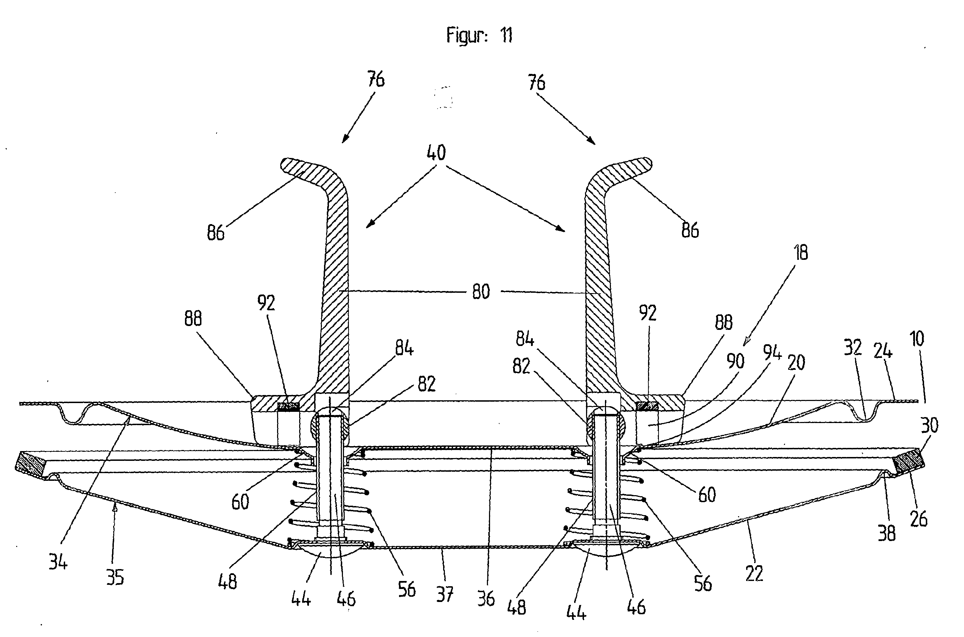

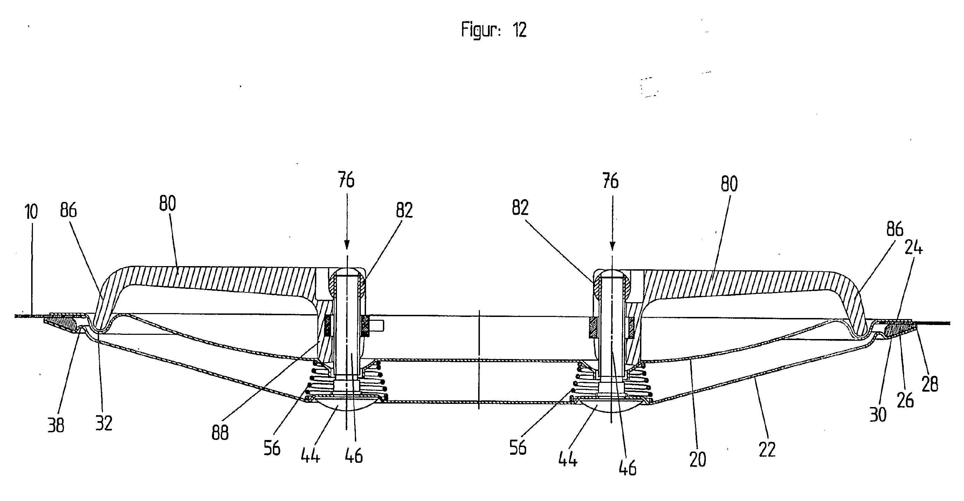

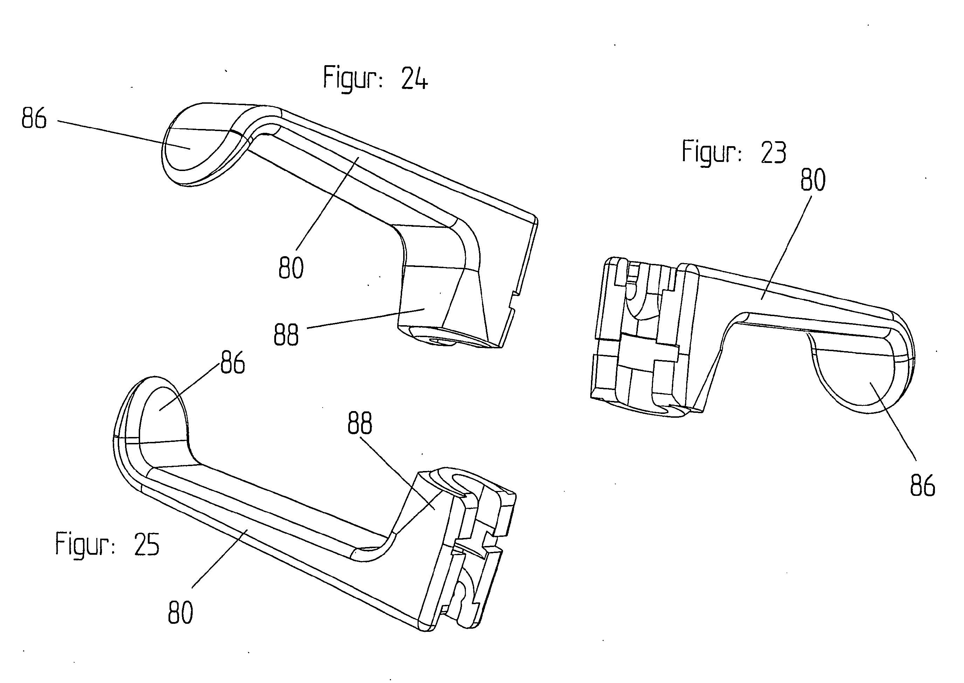

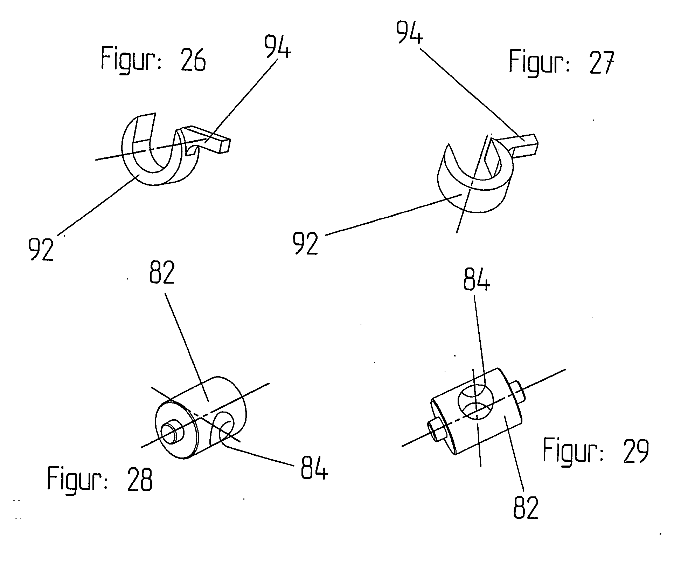

Die in den Figuren 11 bis 29 dargestellte zweite Ausführungsform des erfindungsgemäßen Revisionsverschlusses unterscheidet sich von der in den Figuren 1 bis 8 dargestellten Ausführungsform lediglich durch die andersartige Gestaltung der die Spannvorrichtung bildenden beiden Klemmeinrichtungen. Statt der mit Schraubhandgriff 50 arbeitenden Klemmeinrichtungen 42 sind bei dieser zweiten Ausführungsform allgemein mit 76 bezeichnete Klemmeinrichtungen vorgesehen, die zusammen die Spannvorrichtung 40 bilden. Zwar sind bei kleineren Revisionsverschlüssen auch Ausführungsformen mit nur einer Klemmeinrichtung 42 bzw. 76 möglich, jedoch werden im Allgemeinen zwei in der Längsmittelachse des Revisionsdeckels 18 im Abstand voneinander angeordnete Klemmeinrichtungen bevorzugt. Die Klemmeinrichtungen 76 gemäß den Figuren 11 bis 29 arbeiten mit je einem im Wesentlichen klinkenförmigen Spannhebel 80, der jeweils um einen senkrecht zur Zeichenebene stehende auf dem Schraubenbolzen 46 verankerten Lagerbolzen 82 zwischen einer in Fig.11 dargestellten, senkrecht vom Kanal 10 nach außen stehenden Öffnungsstellung und einer in Fig.12 dargestellten, etwa parallel zur Wandung des Kanals liegenden Schließstellung oder Spannstellung verschwenkbar ist. Mit Ausnahme des Spannhebels 80 und der seiner Lagerung und Sicherung dienenden Teile sind alle anderen Teile der Ausführungsform gemäß Figuren 11 bis 29 identisch mit den Teilen der Ausführungsform gemäß Figuren 1 bis 8. Die entsprechenden Teile werden daher nicht nochmals beschrieben.

Der senkrecht zur Längsachse des Schraubenbolzens 46 verlaufende Lagerbolzen 82 ist mittels einer ein Innengewinde tragenden Bohrung durch unterschiedlich weites Aufschrauben auf das Außengewinde 48 des Schraubenbolzens 46 verstellbar quer auf das äußere Ende des Schraubenbolzens 46 aufgeschraubt. Um diesen Lagerbolzen 82 ist der Spannhebel 80 zwischen der Öffnungsstellung gemäß Fig.11 und der Spannstellung gemäß Fig.12 verschwenkbar gelagert. Das abgewinkelte freie Ende 86 jedes Spannhebels 80 greift in der Spannstellung gemäß Fig.12 von außen in den Ausrichtwulst 32 des Außendeckels 20 ein, so dass keinerlei vorstehende Teile oder Kanten gebildet werden. Ein exzentrischer Spannnocken 88 des Spannhebels 80 drückt beim Verschwenken aus der Öffnungsstellung gemäß Fig.11 in die Schließstellung gemäß Fig.12 auf die Außenseite des Außendeckels 20 und zieht dadurch unter Zusammendrücken der Schraubendruckfeder 56 den Innendeckel in die geschlossene Stellung gemäß Fig.12. Am Ende dieser Spannbewegung des Spannhebels 80 rastet der Spannocken 88 in die den Schraubenbolzen 46 umfassende Kugelpfanne 60 ein. Der Spannnocken 88 ist als im Querschnitt etwa U-förmiger Drucknocken ausgebildet, der in der Schließ- oder Spannstellung gemäß Fig.12 den Schraubenbolzen 46 in seinem oberen Abschnitt umfasst. Je weiter der Lagerbolzen 82 auf das obere Ende des Schraubenbolzens 46 aufgeschraubt ist, desto weiter zieht der Spannnocken 88 die beiden Deckel 20 und 22 gegeneinander, so dass durch Verschrauben des Lagerbolzens 82 der Anpressdruck zwischen Außendeckel 20 und Innendeckel 22 verstellt werden kann.

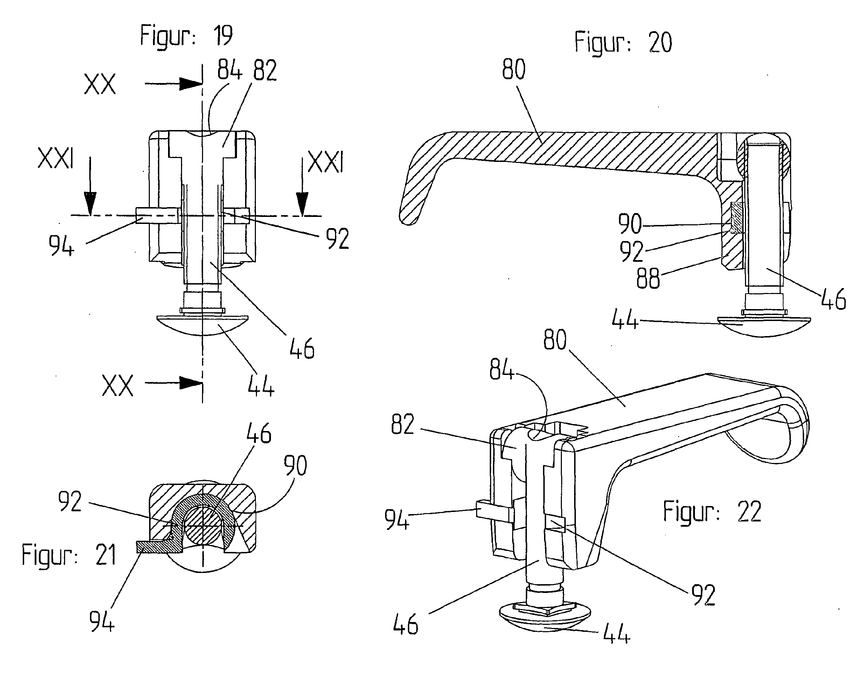

An der Innenseite des U-Querschnitts des Spannnockens 88 ist eine um den Umfang desselben verlaufende Nut 90 vorgesehen, in der ein teilringförmiger Sperrkörper 92 mittels eines Betätigungshebels 94 zwischen einer den Spannhebel 80 am Schraubenbolzen 46 verriegelnden Sperrstellung (Fig.17) und einer den Spannhebel 80 freigebenden Öffnungsstellung (Fig.21) verdrehbar gelagert ist. Dadurch ist eine zum Einrasten des Spannnockens 88 in die Kugelpfanne 60 zusätzliche Sicherungseinrichtung des Spannhebels 80 in seiner geschlossenen Spannstellung möglich, die sehr einfach durch Verstellen des Betätigungshebels 94 zu bedienen ist.

Es ist ohne Weiteres zu sehen, dass die Ausführungsform gemäß Figuren 11 bis 29 noch wesentlich einfacher und schneller zu bedienen ist als die mit den Schraubhandgriffen arbeitende Ausführungsform gemäß den Figuren 1 bis 8.

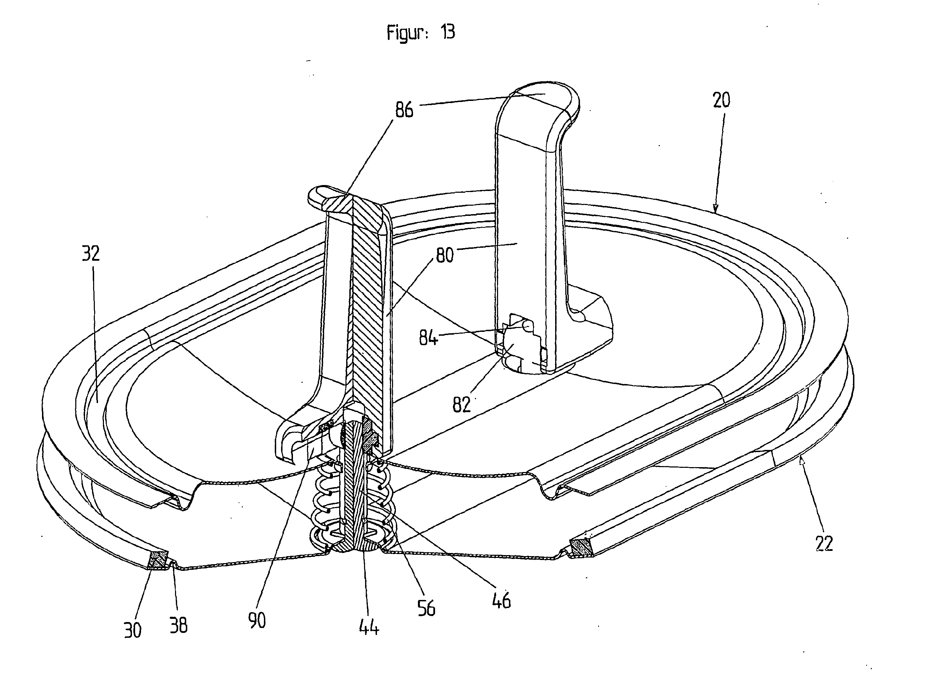

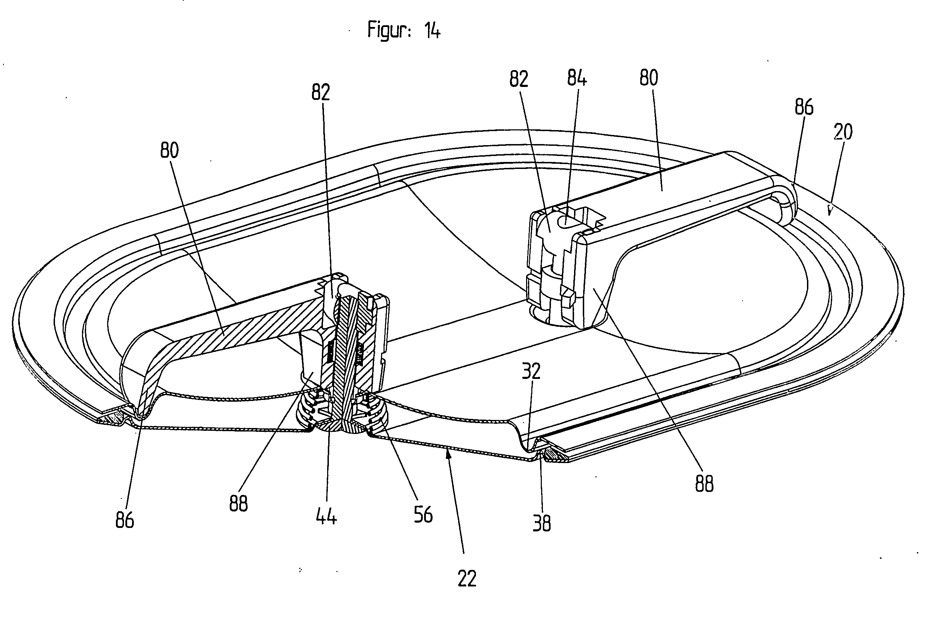

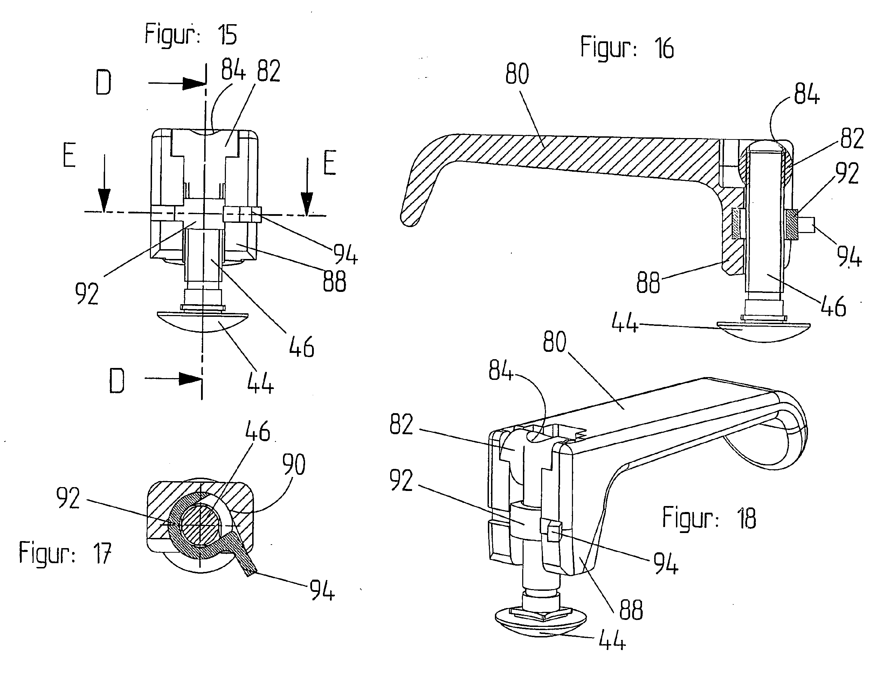

Während die Figuren 13 und 14 Schrägansichten dieser Ausführungsform des Revisionsverschlusses in geöffnetem bzw. geschlossenem Zustand zeigen, sind in den Figuren 15 bis 29 Einzelheiten dieser Ausführungsform gemäß der obigen Figurenaufzählung dargestellt.

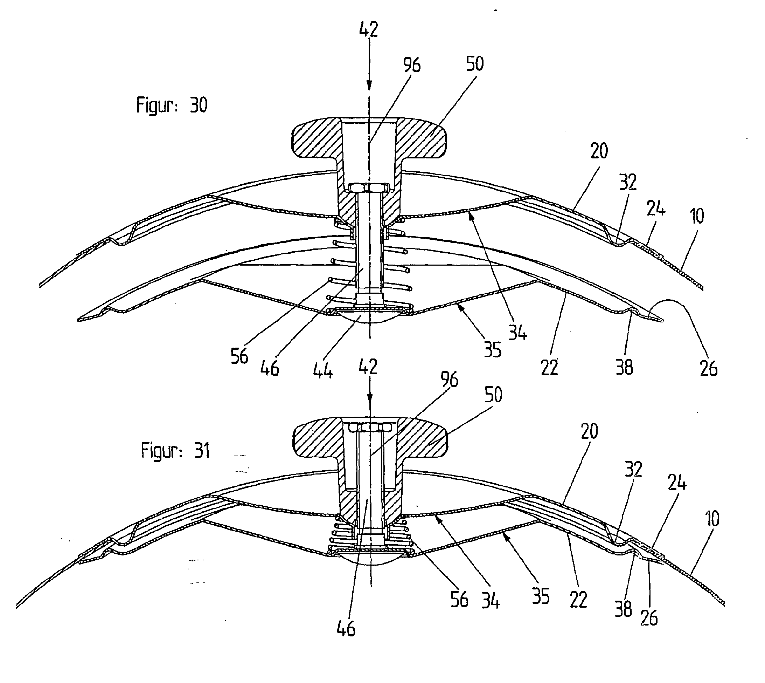

Wie eingangs erwähnt, ist der erfindungsgemäße Revisionsverschluss nicht nur bei Kanälen mit rechteckigem oder sehr flachovalem Querschnitt anwendbar, sondern ohne Weiteres bei geeigneter Formung des Revisionsverschlusses auch bei stark ovalen oder sogar runden Rohren. Ein Ausführungsbeispiel der Anwendung auf ein Rohr 10 mit rundem Querschnitt ist in den Figuren 30 und 31 wiedergegeben. Da die Ausführungsform im Wesentlichen der Ausführungsform gemäß Figuren 1 bis 8 entspricht, sind hier die gleichen Bezugszeichen verwendet, obwohl die Form des Außendeckels 20 und die Form des Innendeckels 22 quer zu ihrer Längserstreckung der Krümmung der Kanalwand 10 angepasst sind. Im Übrigen entspricht die Wirkungsweise dieser Ausführungsform genau der Ausführungsform gemäß Figuren 1 bis 8, obwohl die Figuren 30 und 31 gegenüber Figuren 1 und 2 zur Vereinfachung der Darstellung um 90° um die Mittelachse 96 verdreht sind, wie es auch bei den Figuren 3 und 4 der Fall ist. Dadurch ist nur eine Spanneinrichtung 42 in den Figuren 30 und 31 zu sehen. Zur weiteren Vereinfachung ist auch die Dichtung 30 bei dieser Darstellung weggelassen. Trotzdem ist aufgrund der Beschreibung der Figuren 1 bis 8 die Funktionsweise der Ausführungsform gemäß Figuren 30 und 31 ohne Weiteres zu verstehen, wobei gleiche Bezugszeichen gleiche oder entsprechende Teil bedeuten.

Nur in ihrem randnahen Abschnitt anschließend an die Wulste 32 und 38 sind Außendeckel 20 und Innendeckel 22 der Rundung des Rohrs 10 angepasst, während die Mittelabschnitte 34 bzw. 35 in entsprechender Weise geformt sind wie bei der Ausführungsform gemäß Figuren 1 bis 8. Je größer der Rohrdurchmesser ist, desto größer kann der erfindungsgemäß ausgebildete Mittelteil 34 bzw. 35 werden, der wie beim flachen Revisionsverschluß ausgebildet ist. Bei sehr großen Rohrdurchmessern ergibt sich ein nahezu gleicher Querschnitt wie bei einem Revisionsverschluß für ebene Rohrwände.

### Bezugszeichenliste

- 10: Kanal
- 12: Innenwand des Kanals 10
- 14: Außenwand des Kanals 10
- 16: Kante der Revisionsöffnung
- 18: Revisionsverschluss
- 20: Außendeckel
- 22: Innendeckel
- 24: Rand des Außendeckels 20
- 26: Rand des Innendeckels 22
- 28: Außenkante
- 30: Dichtstreifen
- 32: Ausrichtwulst
- 34: Mittelteil des Außendeckels 20
- 35: Mittelteil des Innendeckels 22
- 36: mittlerer Abschnitt des Außendeckels 20
- 37: mittlerer Abschnitt des Innendeckels 22
- 38: Haltewulst
- 40: Spannvorrichtung
- 42: Klemmeinrichtung mit Schraubhandgriffen
- 44: Kopf
- 46: Schraubenbolzen
- 48: Außengewinde
- 50: Schraubhandgriff
- 52: Ausnehmung
- 54: Anschlagmutter
- 56: Schraubendruckfeder
- 58: Druckfläche
- 60: Kugelpfanne
- 62: Außenfläche
- 64: Umfang
- 66: Rändelung
- 68: Vertikalachse
- 70: Dichtung
- 72: äußerer Schenkel
- 74: innerer Schenkel
- 76: Klemmeinrichtung mit Spannhebeln
- 80: Spannhebel
- 82: Lagerbolzen
- 84: Bohrung
- 86: Ende
- 88: Spannnocken
- 90: Nut
- 92: Sperrkörper
- 94: Betätigungshebel.
- 96: Mittelachse

## Patentansprüche

1. Revisionsverschluss (18) zum Verschließen einer ovalen Revisionsöffnung eines Blechkanals (10) mit eckigem, rundem oder ovalem Querschnitt, mit einem Außendeckel (20) und einem Innendeckel (22), deren umlaufende Ränder (24,26) an Außenwand (14) bzw. Innenwand (12) des Blechkanals (10) unter Druck anliegen, wenn Außendeckel (20) und Innendeckel (22) durch eine dafür vorgesehene festziehbare Spannvorrichtung (40) gegeneinandergezogen sind, **dadurch gekennzeichnet, dass** Außendeckel (20) und Innendeckel (22) je einen Mittelteil (34,35) mit ins Kanalinnere gewölbtem oder eingesenktem Querschnitt aufweisen und der Außendeckel (20) zwischen dem Mittelteil (34) und dem flachen Rand (24) einen umlaufenden, zum Kanalinneren vorspringenden Ausrichtwulst (32) aufweist.

2. Revisionsverschluss nach Anspruch 1, **dadurch gekennzeichnet, dass** wenigstens einer der beiden Ränder (24,26) eine ihn überdeckende elastische Dichtung (30) zur Anlage an der Kanalwandung (10) trägt.

3. Revisionsverschluss nach Anspruch 1, **dadurch gekennzeichnet, dass** auf die Kante (16) der Revisionsöffnung eine die Kante (16) umfassende elastische Dichtung (70) mit U-Profil aufgesteckt und/oder aufgeklebt ist.

4. Revisionsverschluss nach Anspruch 3, **dadurch gekennzeichnet, dass** der an der Kanalinnenwand (12) anliegende innere Schenkel (74) der Dichtung (70) wulstförmig verdickt ist.

5. Revisionsverschluss nach einem der vorangehenden Ansprüche, **dadurch gekennzeichnet, dass** der Mittelteil (34) des Außendeckels (20) wenigstens in seinem dem Deckelrand (24) nahe gelegenen Teil sphärisch gewölbt ist.

6. Revisionsverschluss nach einem vorangehenden Ansprüche, **dadurch gekennzeichnet, dass** der Mittelteil (35) des Innendeckels (22) aus zwei schrägen Ebenen und zwei halbkegelförmigen Abschnitten besteht.

7. Revisionsverschluss nach einem der vorangehenden Ansprüche, **dadurch gekennzeichnet, dass** der Mittelteil (35) sphärisch gewölbt ist.

8. Revisionsverschluss nach einem der vorangehenden Ansprüche, **dadurch gekennzeichnet, dass** der Innendeckel (22) anschließend an den Rand (26) einen nach außen vorspringenden Haltewulst (38) aufweist, dessen Tiefe geringer ist als die Tiefe des Ausrichtwulstes (32) des Außendeckels (20).

9. Revisionsverschluss nach einem der vorangehenden Ansprüche, **dadurch gekennzeichnet, dass** bei langgestrecktem Umriss von Außen- und Innendeckel (20,22) die Spannvorrichtung (40) aus zwei gleichen Klemmeinrichtungen (42, 76) besteht, die auf die Längsachse von Außen- und Innendeckel (20,22) zentriert sind.

10. Revisionsverschluss nach einem der Ansprüche 1 bis 9, **dadurch gekennzeichnet, dass** jede Klemmeinrichtung (76) aus einem im Mittelteil (35) des Innendeckels (22) verankerten, nach außen stehenden den Außendeckel (20) durchsetzenden Schraubenbolzen (46) und mit dessen Ende schwenkbar verbundenen klinkenförmigen Spannhebel (80) besteht, der senkrecht zu dessen Längsachse zwischen einer von der Kanalwand (10) etwa senkrecht nach außen stehenden Öffnungsstellung (Fig. 11) und einer etwa parallel zur Kanalwand (10) liegenden Spannstellung (Fig. 12) verschwenkbar ist.

11. Revisionsverschluss nach Anspruch 10, **dadurch gekennzeichnet, dass** jeder Schraubenbolzen (46) von je einer an Außendeckel (20) und Innendeckel (22) abgestützten Schraubendruckfeder (56) umfasst ist, welche Außendeckel (20) und Innendeckel (22) beim Öffnen des Revisionsverschlusses auseinanderdrückt und auf Abstand hält.

12. Revisionsverschluss nach Anspruch 10 oder 11, **dadurch gekennzeichnet, dass** der Außendeckel (20) je eine den Schraubenbolzen. (46) umfassende Kugelpfanne (60) enthält, in die ein exzentrischer Spannnocken (88) des Spannhebels (80) in der Spannstellung desselben einrastet.

13. Revisionsverschluss nach einem der Ansprüche 10 bis 12, **dadurch gekennzeichnet, dass** je ein Lagerbolzen (82) mittels einer ein Innengewinde tragenden Bohrung (84) verstellbar quer auf das äußere Ende des Schraubenbolzens (46) aufgeschraubt ist und dass der Spannhebel (80) jeweils schwenkbar auf dem Lagerbolzen (82) gelagert ist.

14. Revisionsverschluss nach einem der Ansprüche 10 bis 13, **dadurch gekennzeichnet, dass** ein abgewinkeltes freies Ende (86) jedes Spannhebels (80) in dessen geschlossener Spannstellung (Fig.12) in den Ausrichtwulst (32) eingreift.

15. Revisionsverschluss nach einem der Ansprüche 10 bis 14, **dadurch gekennzeichnet, dass** der exzentrische Spannnocken (88) als in der geschlossenen Spannstellung des Spannhebels (80) den Schraubenbolzen (46) umfassender, im Querschnitt etwa U-förmiger, von außen auf den Außendeckel (20) drückender Drucknocken ausgebildet ist.

16. Revisionsverschluss nach Anspruch 15, **dadurch gekennzeichnet, dass** der Spannnocken (88) an der Innenseite seines U-Querschnitts eine um den Umfang desselben verlaufende Nut (90) aufweist, in der ein teilringförmiger Sperrkörper (92) mittels eines Betätigungshebels (94) zwischen einer den Spannhebel (80) am Schraubenbolzen (46) verriegelnden Sperrstellung und einer den Spannhebel (80) freigebenden Öffnungsstellung verdrehbar gelagert ist.

17. Revisionsverschluss nach einem der Ansprüche 1 bis 9, **dadurch gekennzeichnet, dass** jede Klemmeinrichtung (42) aus einem im Mittelteil (35) des Innendeckels (22) verankerten, nach außen stehenden Schraubenbolzen (46) und einem auf den Schraubenbolzen (46) geschraubten und an der Außenseite des Außendeckels (20) angreifenden Schraubhandgriff (50) besteht.

18. Revisionsverschluss nach Anspruch 17, **dadurch gekennzeichnet, dass** jeder Schraubenbolzen (46) von je einer an Außendeckel (20) und Innendeckel (22) abgestützten Schraubendruckfeder (56) umfasst ist, welche Außendeckel (20) und Innendeckel (22) beim Öffnen des Revisionsverschlusses auseinanderdrückt und auf Abstand hält.

19. Revisionsverschluss nach Anspruch 17 oder 18, **dadurch gekennzeichnet, dass** der Außendeckel (20) eine den Schraubenbolzen' (46) umfassende Kugelpfanne (60) enthält, an der eine sphärische Druckfläche (58) des Schraubhandgriffs (50) gleitend angreift.

20. Revisionsverschluss nach einem der Ansprüche 17 bis 19, **dadurch gekennzeichnet, dass** jeder Schraubhandgriff (50) eine nach außen gewölbte Außenfläche (62) sowie eine mittige Ausnehmung (52) aufweist, in welcher das äußere Ende des Schraubenbolzens (46) bei völlig festgezogener Spannvorrichtung (40) vollständig aufgenommen ist.

## Claims

1. Maintenance cover (18) for closing an oval maintenance opening in a sheet metal duct (10) of square, round or oval cross section, said maintenance cover comprising an outer lid (20) and an inner lid (22), the peripheral edges (24, 26) of which respectively bear under pressure against the outer wall (14) and the inner wall (12) of the sheet metal duct (10) when the outer lid (20) and the inner lid (22) are pulled towards one another by means of a clamping device (40) that can be tightened for this purpose, **characterized in that** the outer lid (20) and the inner lid (22) in each case have a central part (34, 35) with a cross section that is curved or sunk in towards the interior of the duct, and the outer lid (20) comprises, between the central part (34) and the flat edge (24), a peripheral aligning bead (32) which protrudes towards the interior of the duct.

2. Maintenance cover according to Claim 1, **characterized in that** at least one of the two edges (24, 26) carries an elastic seal (30) which covers it and is designed to bear against the duct wall (10).

3. Maintenance cover according to Claim 1, **characterized in that** an elastic seal (70) which surrounds the edge (16) and has a U-shaped profile is placed and/or adhesively bonded onto the edge (16) of the maintenance opening.

4. Maintenance cover according to Claim 3, **characterized in that** the inner leg (74) of the seal (70) which bears against the duct inner wall (12) is thickened in a bead-like manner.

5. Maintenance cover according to one of the preceding claims, **characterized in that** the central part (34) of the outer lid (20) is curved in a spherical manner at least in its part close to the lid edge (24).

6. Maintenance cover according to one of the preceding claims, **characterized in that** the central part (35) of the inner lid (22) consists of two inclined planes and two half-cone-shaped sections.

7. Maintenance cover according to one of the preceding claims, **characterized in that** the central part (35) is curved in a spherical manner.

8. Maintenance cover according to one of the preceding claims, **characterized in that** the inner lid (22) has an outwardly protruding holding bead (38) next to the edge (26), the depth of said holding bead being smaller than the depth of the aligning bead (32) of the outer lid (20).

9. Maintenance cover according to one of the preceding claims, **characterized in that**, in the case of an elongate contour of the outer and inner lid (20, 22), the clamping device (40) consists of two identical tightening devices (42, 76) which are centred on the longitudinal axis of the outer and inner lid (20, 22).

10. Maintenance cover according to one of Claims 1 to 9, **characterized in that** each tightening device (76) consists of a screw bolt (46) which is anchored in the central part (35) of the inner lid (22) and protrudes outwards and passes through the outer lid (20), and of a pawl-type clamping lever (80) which is pivotably connected to the end of said screw bolt and can be pivoted perpendicular to its longitudinal axis between an open position (Fig. 11) in which it protrudes essentially perpendicularly outwards from the duct wall (10) and a clamped position (Fig. 12) in which it lies essentially parallel to the duct wall (10).

11. Maintenance cover according to Claim 10, **characterized in that** each screw bolt (46) is surrounded by a respective helical compression spring (56) which is supported against the outer lid (20) and the inner lid (22) and which pushes the outer lid (20) and the inner lid (22) apart and keeps them at a distance from one another when the maintenance cover is opened.

12. Maintenance cover according to Claim 10 or 11, **characterized in that** the outer lid (20) contains a respective spherical socket (60) surrounding each screw bolt (46), into which spherical socket an eccentric clamping cam (88) of the clamping lever (80) latches in the clamped position.

13. Maintenance cover according to one of Claims 10 to 12, **characterized in that** a respective bearing bolt (82) is adjustably screwed transversely onto the outer end of the screw bolt (46) by means of a bore (84) having an internal thread, and **in that** the clamping lever (80) is in each case pivotably mounted on the bearing bolt (82).

14. Maintenance cover according to one of Claims 10 to 13, **characterized in that** an angled free end (86) of each clamping lever (80), in the closed, clamped position thereof (Fig. 12), engages in the aligning bead (32).

15. Maintenance cover according to one of Claims 10 to 14, **characterized in that** the eccentric clamping cam (88) is designed as a pressure cam which surrounds the screw bolt (46) in the closed, clamped position of the clamping lever (80), is essentially U-shaped in cross section and presses against the outer lid (20) from the outside.

16. Maintenance cover according to Claim 15, **characterized in that** the clamping cam (88) has, on the inner side of its U-shaped cross section, a groove (90) which runs around the periphery thereof and in which a partially ring-shaped locking body (92) is mounted such that it can rotate by means of an actuating lever (94) between a locked position in which it locks the clamping lever (80) to the screw bolt (46) and an open position in which it releases the clamping lever (80).

17. Maintenance cover according to one of Claims 1 to 9, **characterized in that** each tightening device (42) consists of an outwardly protruding screw bolt (46) which is anchored in the central part (35) of the inner lid (22), and of a screw handle (50) which is screwed onto the screw bolt (46) and acts on the outer side of the outer lid (20).

18. Maintenance cover according to Claim 17, **characterized in that** each screw bolt (46) is surrounded by a respective helical compression spring (56) which is supported against the outer lid (20) and the inner lid (22) and which pushes the outer lid (20) and the inner lid (22) apart and keeps them at a distance from one another when the maintenance cover is opened.

19. Maintenance cover according to Claim 17 or 18, **characterized in that** the outer lid (20) contains a spherical socket (60) surrounding the screw bolt (46), which spherical socket is acted upon by a spherical pressure face (58) of the screw handle (50).

20. Maintenance cover according to one of Claims 17 to 19, **characterized in that** each screw handle (50) has an outwardly curved outer face (62) and also a central recess (52), in which the outer end of the screw bolt (46) is fully accommodated when the clamping device (40) is fully tightened.

## Revendications

1. Fermeture d'inspection (18) pour une ouverture d'inspection ovale d'un canal en tôle (10) de section rectangulaire, ronde ou ovale, avec un couvercle extérieur (20) et un couvercle intérieur (22) dont les bords périphériques (24, 26) sont en appui sous pression avec la paroi extérieure (14) ou intérieure (12) du canal en tôle (10) lorsque le couvercle extérieur (20) et le couvercle intérieur (22) sont serrés l'un contre l'autre par un dispositif de serrage (40),
**caractérisée en ce que**
le couvercle extérieur (20) et le couvercle intérieur (22) présentent chacun une partie médiane (34, 35) de section courbée ou enfoncée à l'intérieur du canal, et le couvercle extérieur (20) entre la partie médiane (34) et le bord plat (24) présente un bourrelet d'alignement (32) périphérique faisant saillie en direction de l'intérieur du canal.

2. Fermeture d'inspection selon la revendication 1,
**caractérisée en ce qu'**
au moins l'un des deux bords (24, 26) comporte une garniture d'étanchéité (30) élastique le recouvrant pour prendre appui sur la paroi du canal (10).

3. Fermeture d'inspection selon la revendication 1,
**caractérisée en ce qu'**
une garniture d'étanchéité (70) élastique avec un profil en U est enfichée et/ou collée sur l'arête (16) de l'ouverture d'étanchéité qu'elle entoure.

4. Fermeture d'inspection selon la revendication 3,
**caractérisée en ce que**
le côté intérieur (74) de la garniture d'étanchéité (70) prenant appui sur la paroi intérieure du canal (12) s'épaissit en formant un bourrelet.

5. Fermeture d'inspection selon l'une des revendications précédentes,
**caractérisée en ce que**
la partie médiane (34) du couvercle extérieur (20) est courbée de manière sphérique au moins dans sa partie située à proximité du bord du couvercle (24).

6. Fermeture d'inspection selon l'une des revendications précédentes,
**caractérisée en ce que**
la partie médiane (35) du couvercle intérieur (22) est constituée de deux plans inclinés et de deux sections en forme de demi-cône.

7. Fermeture d'inspection selon l'une des revendications précédentes,
**caractérisée en ce que**
la partie médiane (35) est courbée de manière sphérique.

8. Fermeture d'inspection selon l'une des revendications précédentes,
**caractérisée en ce que**
le couvercle intérieur (22) présente un bourrelet de retenue (38) faisant saillie vers l'extérieur aboutant au bord (26) et dont la profondeur est inférieure à la profondeur du bourrelet d'alignement (32) du couvercle extérieur (20).

9. Fermeture d'inspection selon l'une des revendications précédentes,
**caractérisée en ce que**
dans un profil en longueur des couvercles extérieur et intérieur (20, 22), le dispositif tendeur (40) est constitué de deux dispositifs de serrage (42, 76) identiques centrés sur l'axe longitudinal des couvercles intérieur et extérieur (20, 22).

10. Fermeture d'inspection selon l'une des revendications 1 à 9,
**caractérisée en ce que**
chaque dispositif de serrage (76) est constitué d'une tige filetée (46), ancrée dans la partie médiane (35) du couvercle intérieur (22) et orientée vers l'extérieur, traversant le couvercle extérieur (20) et dont l'extrémité est reliée de manière pivotante à un levier tendeur (80) en forme de levier à cliquet pouvant pivoter perpendiculairement à son axe longitudinal entre une position d'ouverture approximativement perpendiculaire à la paroi du canal (10) (figure 11) et une position de serrage approximativement parallèle à la paroi du canal (10) (figure 12).

11. Fermeture d'inspection selon la revendication 10,
**caractérisée en ce que**
chaque tige filetée (46) est entourée d'un ressort de pression hélicoïdal (56), appuyé sur le couvercle extérieur (20) et le couvercle intérieur (22), qui desserre le couvercle extérieur (20) et le couvercle intérieur (22) lors de l'ouverture de la fermeture d'inspection et les maintient à distance.

12. Fermeture d'inspection selon la revendication 10 ou 11,
**caractérisée en ce que**
le couvercle extérieur (20) comprend un logement de rotule (60) entourant chaque tige filetée (46) dans lequel un taquet tendeur excentrique (88) du levier tendeur (80) s'engage en position de fermeture de ce dernier.

13. Fermeture d'inspection selon l'une quelconque des revendications 10 à 12,
**caractérisée en ce qu'**
un boulon de palier (82) est vissé de manière réglable au moyen d'un alésage (84) portant un filetage femelle perpendiculairement à l'extrémité extérieure de chaque tige filetée (46) et le levier tendeur (80) est pivotant sur le boulon de palier (82).

14. Fermeture d'inspection selon l'une des revendications 10 à 13,
**caractérisée en ce qu'**
en position de serrage (figure 12) fermée, une extrémité libre (86) coudée de chaque levier tendeur (80) s'engage dans le bourrelet d'alignement (32).

15. Fermeture d'inspection selon l'une quelconque des revendications 10 à 14,
**caractérisée en ce que**
le taquet tendeur excentrique (88) est un taquet de pression de coupe transversale approximativement en forme de U appuyant de l'extérieur sur le couvercle extérieur (20) et entourant la tige filetée (46) en position de serrage fermée du levier tendeur (80).

16. Fermeture d'inspection selon la revendication 15,
**caractérisée en ce que**
le taquet tendeur (88) présente sur le côté intérieur de sa section transversale en U une rainure (90) périphérique dans laquelle un corps de serrage (92) en forme d'anneau partiel est pivotant au moyen d'un levier d'actionnement (94) entre une position de fermeture verrouillant le levier tendeur (80) au niveau de la tige filetée (46) et une position d'ouverture libérant le levier tendeur (80).

17. Fermeture d'inspection selon l'une des revendications 1 à 9,
**caractérisée en ce que**
chaque dispositif de serrage (42) est constitué d'une tige filetée (46) orientée vers l'extérieur et ancrée dans la partie médiane (35) du couvercle intérieur (22) et d'une poignée à vis (50) vissée sur la tige filetée (46) et s'engageant sur le côté extérieur du couvercle extérieur (20).

18. Fermeture d'inspection selon la revendication 17,
**caractérisée en ce que**
chaque tige filetée (46) est entourée d'un ressort de pression hélicoïdal (56), appuyé sur le couvercle extérieur (20) et le couvercle intérieur (22), qui desserre le couvercle extérieur (20) et le couvercle intérieur (22) lors de l'ouverture de la fermeture d'inspection et les maintient à distance.

19. Fermeture d'inspection selon la revendication 17 ou 18,
**caractérisée en ce que**
le couvercle extérieur (20) comporte un logement de rotule (60) entourant la tige filetée (46) dans laquelle une surface de pression sphérique (58) de la poignée à vis (50) s'engage en coulissant.

20. Fermeture d'inspection selon l'une des revendications 17 à 19,
**caractérisée en ce que**
chaque poignée à vis (50) présente une surface extérieure (62) courbée vers l'extérieur ainsi qu'un évidement médian (52) dans lequel l'extrémité extérieure de la tige filetée (46) est entièrement logée lorsque le dispositif tendeur (40) est entièrement serré.
